# EUROPÄISCHE PATENTANMELDUNG

(11) **EP 4 380 011 A1**
(43) Veröffentlichungstag der Anmeldung: **05.06.2024**
(21) Anmeldenummer: 22210072.9
(22) Anmeldetag: 29.11.2022
(51) Int. Cl.: H02K 3/24, H02K 5/20, H02K 9/20, H02K 9/22, H02K 11/33, H02K 9/19

(54) **KÜHLVORRICHTUNG FÜR EINE UMRICHTERINTEGRIERTE, ELEKTRISCHE MASCHINE**

(71) Anmelder: Siemens Aktiengesellschaft, 80333 München (DE)
(72) Erfinder: Richter, Johannes, 90768 Fürth (DE); Weidermann, Christian, 07381 Pößneck (DE)
(74) Vertreter: Siemens Patent Attorneys

(57) **Zusammenfassung**

Die Erfindung betrifft eine Kühlvorrichtung (1) für eine umrichterintegrierte, elektrische Maschine (2), wobei die Kühlvorrichtung (1) einen Kühlkanal (3) mit mindestens einem fluiddurchströmbaren Kühlkörper (4) umfasst. Zur Verbesserung des Kühlsystems wird vorgeschlagen, dass die Kühlvorrichtung (1) ausgebildet ist, Wärme von einem Umrichter (5) der umrichterintegrierten, elektrischen Maschine (2) und von einem Stator (21) der umrichterintegrierten, elektrischen Maschine (2) aufzunehmen, wobei zumindest ein Teil des Umrichters (5) mit dem fluiddurchströmbaren Kühlkörper (4) thermisch verbindbar ist, wobei zumindest ein Teil des Stators (21) mit der Kühlvorrichtung (1) thermisch verbindbar ist. Ferner betrifft die Erfindung eine umrichterintegrierte, elektrische Maschine (2) mit einer derartigen Kühlvorrichtung (1), wobei zumindest ein Teil des Umrichters (5), insbesondere Halbleiter (51) des Umrichters (5), mit der Kühlvorrichtung (1), insbesondere mit dem fluiddurchströmbaren Kühlkörper (4), thermisch verbunden ist, wobei zumindest ein Teil des Stators (21) mit der Kühlvorrichtung (1) thermisch verbunden ist. Die Erfindung betrifft weiter ein Verfahren zur Herstellung einer derartigen Kühlvorrichtung (1) oder einer derartigen umrichterintegrierten, elektrischen Maschine (2), wobei zumindest ein Teil der Kühlvorrichtung (1) mittels eines additiven Fertigungsverfahrens hergestellt wird.

## Beschreibung

Die Erfindung betrifft eine Kühlvorrichtung für eine umrichterintegrierte, elektrische Maschine, wobei die Kühlvorrichtung einen Kühlkanal mit mindestens einem fluiddurchströmbaren Kühlkörper umfasst. Weiter betrifft die Erfindung eine umrichterintegrierte, elektrische Maschine mit einer derartigen Kühlvorrichtung. Die Erfindung betrifft ferner ein Verfahren zur Herstellung einer derartigen Kühlvorrichtung oder einer derartigen umrichterintegrierten, elektrischen Maschine.

Für ein neuartiges Konzept elektrischer Maschinen mit integriertem Umrichter oder Stromrichter, die auch als umrichterintegrierte, elektrische Maschinen bezeichnet werden, wird eine elektrische Konfiguration mit niedrigen Spannungen und hohen Strömen verwendet. Die hohen Ströme verursachen aufgrund des ohmschen Widerstands der stromführenden Komponenten eine im Vergleich zu herkömmlichen elektrischen Maschinen größere Wärmeentwicklung. Eine weitere Wärmequelle sind die elektronischen Bauteile, die sich während ihres Betriebs erwärmen. Dabei entsteht nicht nur durch die Bauteile der elektrischen Maschine Wärme, sondern auch durch die Komponenten des in die elektrische Maschine integrierten Umrichters. Diese Wärme ist aus der elektrischen Maschine mittels eines Kühlsystems an die Umgebung abzuführen. Da das Maschinenkonzept eine integrierte Leistungselektronik des Umrichters vorsieht, besteht ein besonderer Bedarf an eine leistungsfähige Kühlung der Wärmequellen innerhalb der Maschine und den damit verbundenen, beengten Raumverhältnissen. Durch diese größere Wärmeentwicklung ergibt sich darüber hinaus der Bedarf einer effizienten Wärmeabfuhr der in der Maschine und im Umrichter entstehenden Wärme durch das Kühlsystem.

Heutzutage werden Umrichter und elektrische Maschine räumlich getrennt angeordnet und auch unabhängig voneinander gekühlt bzw. entwärmt. Der externe Umrichter, angeordnet beispielsweise in einem Schaltschrank, oftmals in einem getrennten Raum, versorgt die elektrische Maschine mit Strom und Spannung. Der benötigte Platz für den Schaltschrank bzw. die Umrichter stellt in vielen Anwendungsfällen einen Nachteil für den Nutzer dar. Diese Schaltschränke werden extern gekühlt und stellen zudem aufgrund ihrer Dimensionen eine große Fläche zum Wärmeaustausch bereit. Die Kühlung erfolgt üblicherweise mittels Luftkühlung.

Zudem ist die Wärmeentwicklung durch ohmsche Verluste in den stromführenden Komponenten in der elektrischen Maschine aufgrund des niedrigeren Stroms geringer. Die höhere Spannung stellt jedoch höhere Anforderungen an die Isolation, die dadurch deutlich aufwändiger, jedoch mit heutigen Mitteln beherrschbar ist. Neben der Kühlung für den Umrichter wird in der Regel ein weiterer Kühlkreislauf zur Wärmeabfuhr aus der elektrischen Maschine benötigt. Die Rückkühlung der beiden Kühlkreisläufe erfolgt im Normalfall mittels Wärmetauscher an Luft in die Umgebung.

Der Erfindung liegt die Aufgabe zugrunde, ein Kühlsystem für eine elektrische Maschine zu verbessern.

Diese Aufgabe wird durch eine Kühlvorrichtung für eine umrichterintegrierte, elektrische Maschine gelöst, wobei die Kühlvorrichtung einen Kühlkanal mit mindestens einem fluiddurchströmbaren Kühlkörper umfasst, wobei die Kühlvorrichtung ausgebildet ist, Wärme von einem Umrichter der umrichterintegrierten, elektrischen Maschine und von einem Stator der umrichterintegrierten, elektrischen Maschine aufzunehmen, wobei zumindest ein Teil des Umrichters mit dem fluiddurchströmbaren Kühlkörper thermisch verbindbar ist, wobei zumindest ein Teil des Stators mit der Kühlvorrichtung thermisch verbindbar ist. Ferner wird diese Aufgabe durch eine umrichterintegrierte, elektrische Maschine mit einer derartigen Kühlvorrichtung gelöst, wobei zumindest ein Teil des Umrichters, insbesondere Halbleiter des Umrichters, mit der Kühlvorrichtung, insbesondere mit dem fluiddurchströmbaren Kühlkörper, thermisch verbunden ist, wobei zumindest ein Teil des Stators mit der Kühlvorrichtung thermisch verbunden ist. Diese Aufgabe wird weiter durch ein Verfahren zur Herstellung einer derartigen Kühlvorrichtung oder einer derartigen umrichterintegrierten, elektrischen Maschine gelöst, wobei zumindest ein Teil der Kühlvorrichtung mittels eines additiven Fertigungsverfahrens hergestellt wird.

Weitere vorteilhafte Ausgestaltungen der Erfindung sind in den abhängigen Ansprüchen angegeben.

Der Erfindung liegt unter anderem die Erkenntnis zugrunde, dass sich die umrichterintegrierte, elektrische Maschine und das dazugehörige Kühlsystem dadurch verbessern lässt, dass die Kühlvorrichtung als Teil des Kühlsystems gleichzeitig zur Kühlung von Umrichter und Stator genutzt wird. Eine derartige Kühlvorrichtung ist besonders kompakt realisierbar und eignet sich damit im Besonderen zur Kühlung einer umrichterintegrierten, elektrischen Maschine. Dabei hat sich herausgestellt, dass für einen effizienten Wärmetransport ein leistungsfähiges Kühlsystem erforderlich ist. Damit einhergehend werden gerade für eine umrichterintegrierte, elektrische Maschine hohe Wärmeübergangskoeffizient zwischen Fluid und Wärmequelle in vorteilhafter Weise realisiert sowie eine möglichst große Oberfläche zum Wärmeaustausch unter den gegebenen, beengten Platzverhältnissen geschaffen.

Eine umrichterintegrierte, elektrische Maschine bezeichnet eine elektrische Maschine, in der ein Umrichter zur elektrischen Speisung dieser elektrischen Maschine integriert ist. Mit anderen Worten befindet sich der Umrichter im Innern des Gehäuses der umrichterintegrierten, elektrischen Maschine. Dazu wird nun vorgeschlagen, auch den Umrichter mit dem Kühlsystem der elektrischen Maschine zu verbinden und so zu entwärmen, d.h. zu kühlen. Somit handelt es sich bei der umrichterintegrierten, elektrischen Maschine gleichzeitig auch um eine umrichtergespeiste, elektrische Maschine.

Damit ist für die wesentlichen Komponenten aus Umrichter und elektrischer Maschine nur noch eine Kühlvorrichtung notwendig, deren Fluid Wärme von Teilen des Umrichters der umrichterintegrierten, elektrischen Maschine und zumindest von Teilen des Stators der umrichterintegrierten, elektrischen Maschine aufnimmt. Dabei nimmt der fluiddurchströmbare Kühlkörper Wärme von dem Umrichter auf, indem Teile des Umrichters, beispielsweise die Halbleiter des Umrichters, mit diesem Kühlkörper verbunden sind. Auf besonders einfache Weise sind die Halbleiter auf dem fluiddurchströmbaren Kühlkörper angeordnet. Wärme des Stators kann dadurch aufgenommen werden, dass die Kühlvorrichtung eine Vorrichtung zur Verbindung mit dem Stator aufweist, die sich zumindest abschnittsweise entlang der Wicklung des Stators oder eines Stabes oder mehreren Stäben des Stators erstreckt. Alternativ kann auch der fluiddurchströmbare Kühlkörper derart ausgebildet sein, dass er sich abschnittsweise entlang der Wicklung des Stators oder eines Stabes oder mehreren Stäben des Stators erstreckt.

Als Fluid der Kühlvorrichtung, auch als Kühlflüssigkeit bezeichnet, können beispielsweise Wasser, ein Gemisch aus Frostschutzmittel wie Alkohol und Wasser, NOVEC oder Flüssigwasserstoff zum Einsatz kommen.

Als besonders vorteilhaft hat es sich erwiesen, die Kühlvorrichtung und insbesondere den fluiddurchströmbaren Kühlkörper mittels eines additiven Fertigungsverfahrens herzustellen. Eine additive Fertigung ist auch unter den Namen 3D Druck oder additive manufacturing (AM) bekannt. Dieses Herstellverfahren ermöglicht die Herstellung des fluiddurchströmbaren Kühlkörpers und der gesamten Kühlvorrichtung in nur einem Stück. Somit entfallen fertigungsbedingte Trennflächen. Dies reduziert den Aufwand bei der Montage, insbesondere die Montagezeit, und senkt das Risiko von Undichtigkeiten im Betrieb. Ebenso entfällt ein aufwändiges Zerspanen und der damit einhergehende Materialverlust. Der Kühlkörper ist somit trotz hoher Leistungsfähigkeit wartungsarm und langlebig, da keine oder zumindest nur wenige Dichtungen vorhanden sind. Ebenso sind kompakte Abmessungen der Kühlvorrichtung realisierbar, die eine Integration eines gemeinsamen Kühlsystems für Umrichter und Statorwicklung der elektrischen Maschine ermöglichen. Durch das additive Fertigungsverfahren ist eine hohe Flexibilität vorhanden, die es ermöglicht, den knapp vorhandenen Einbauraum im Innern der umrichterintegrierten, elektrischen Maschine zur Kühlung von Umrichter und Stator nutzen zu können. Das additive Fertigungsverfahren eignet sich auch im Besonderen für kleine Serien und sogar Einzelanfertigungen von Motoren, da die Kühlung auf jede elektrische Maschine einfach anpassbar ist.

Die additiv gefertigte Kühlvorrichtung, beispielsweise aus Kupfer oder Aluminium, bietet ein hohes Maß an Gestaltungsfreiheit. Dies betrifft insbesondere die Hohlstrukturen, die von dem Fluid durchflossen werden. Diese bilden den Kühlkanal bzw. einen Teil des Kühlkanals. Die additive Fertigung bietet die Möglichkeit, interne Verzweigungen, Turbulatoren und große Oberflächen auf kleinsten Bauraum zu schaffen. Diese Verzweigungen können dann auch eine filigrane Struktur aufweisen, die eine besonders gute Wärmeübertragung ermöglicht. Dadurch gestaltet sich der Wärmeübergang von der Wärmequelle zum Fluid besonders effektiv. Des Weiteren lassen sich durch die additive Fertigung Bauteile und Geometrien herstellen, die mit konventionellen Fertigungsmethoden nicht realisierbar sind.

Durch das additive Fertigungsverfahren weist die Kühlvorrichtung nur wenige Komponenten auf, im Idealfall lässt sich die Kühlvorrichtung durch ein Teil, den fluiddurchströmbaren Kühlkörper, der einen geschlossenen Kühlkreislauf aufweist, realisieren. Aber auch wenn die Kühlvorrichtung mehrere Komponenten aufweist, kann durch einen additiv gefertigten Kühlkörper die Montagezeit reduziert werden.

Durch das additive Fertigungsverfahren lassen sich Schnittstellen oder Interfaces, beispielsweise zu einem fluiddurchflossenen Stab des Stators, auf einfache Weise ohne großen Aufwand individuell herstellen und an die gegebenen Anforderungen anpassen. Diese Schnittstelle kann dann beispielsweise durch eine Vorrichtung zur Verbindung mit dem Stator gebildet werden.

Darüber hinaus werden durch das additive Fertigungsverfahren benötigte Materialien besonders effizient eingesetzt, da diese, teilweise recht teuren Komponenten wie Kupfer, nur dort aufgetragen werden, wo dies aus thermischer Sicht notwendig oder vorteilhaft ist. Das additive Kupfer weist eine hohe thermische Leitfähigkeit auf und ist daher für den Aufbau des Kühlkörpers besonders vorteilhaft nutzbar. Durch die Verwendung von Kupfer bei der additiven Herstellung des Kühlkörpers können Rohstoffkosten bei der Produktion der Kühlvorrichtung gesenkt werden.

Durch eine angepasste Fluidführung kann darüber hinaus ein Temperaturgradient im Bauteil vermieden werden.

Die Strömung des Fluids im Kühlkanal kann sich beispielsweise direkt aus der Erwärmung ergeben. Mit anderen Worten erzeugt der Wärmeeintrag eine Bewegung des Fluids im Kühlkanal. Dieser Effekt wird auch als konvektive Kühlung bezeichnet. Alternativ oder ergänzend kann eine Pumpe oder mehrere Pumpen zur Erzeugung einer Bewegung des Fluids im Kühlkanal eingesetzt werden. Dazu umfasst dann die Kühlvorrichtung in einer vorteilhaften Ausgestaltung eine Kühlmittelpumpe.

Bei einer vorteilhaften Ausgestaltung der Erfindung weist die Kühlvorrichtung eine Vorrichtung zur Verbindung mit dem Stator auf, die derart ausgebildet ist, dass ein durch den fluiddurchströmbaren Kühlkörper fließendes Fluid durch eine Wicklung und/oder mindestens einen Stab des Stators fließt. Dies kann beispielsweise durch eine Direktkühlung des Stators geschehen. Dabei werden einzelne oder alle Stäbe des Stators bzw. der Statorwicklung als Hohlleiter ausgebildet. Diese Hohlleiter bilden dann einen Teil des Kühlkanals. Die Vorrichtung zur Verbindung mit dem Stator bildet dann ein Interface, sodass das Fluid der Kühlvorrichtung leckagefrei Kühlkörper und den Stator durchfließen kann. Auf diesem Wege kann auf besonders einfachem Wege die gleichzeitige Kühlung von Umrichter und Stator realisiert werden. Darüber hinaus ist die Ausgestaltung eines Stabs als Hohlleiter aufgrund der geringen elektrischen Spannung eines Stabes des Stators von weniger als 150 V, insbesondere weniger als 100 V, auf besonders einfache Weise möglich. Mit anderen Worten ist diese Ausgestaltung besonders vorteilhaft, wenn die umrichterintegrierte, elektrische Maschine für einen Betrieb mit einer Nennspannung von weniger als 350 V, insbesondere weniger als 200V, ausgebildet ist.

Bei einer weiteren vorteilhaften Ausgestaltung der Erfindung ist die Kühlvorrichtung eingerichtet, einen Phasenübergang zwischen einer flüssigen und einer gasförmigen Phase als zusätzliche Kühlleistung zu nutzen. Dabei ist es beispielsweise in einem geschlossenen Kühlsystem möglich, unterschiedliche Phasen des Fluids für die Kühlung zu nutzen, indem im Bereich der Wärmequelle ein Übergang des Fluids in den gasförmigen Zustand stattfindet und an anderer Stelle, vorzugsweise im Bereich der Wärmesenke, beispielsweise eines Wärmetauschers oder Rückkühlers, die Kondensation stattfindet. Dadurch wird die Verdampfungsenthalpie des Fluids für die Kühlung in vorteilhafter Weise genutzt. Alternativ ist es in einem offenem Kühlsystem möglich, mittels Spraykühlung, die zu kühlende Komponente mit einer Flüssigkeit zu besprühen und dadurch den Effekt der Verdunstungskälte, also die Verdampfungsenthalpie, zu nutzen. Gerade in einer räumlich engen Einbausituation kann dadurch der Effekt der Kühlung deutlich verstärkt werden.

Bei einer weiteren vorteilhaften Ausgestaltung der Erfindung weist der Kühlkanal eine über die Fließrichtung des Fluids veränderte Geometrie, insbesondere einen veränderten Querschnitt, auf. Durch die veränderte Geometrie lässt sich die Kühlung lokal verbessern, indem der Strömungswiderstand durch die veränderliche Kanalstruktur angepasst wird. Insbesondere durch die Herstellung des Kühlkanals und/oder des Kühlkörpers mittels eines additiven Fertigungsverfahrens ist es auch möglich, die Ausdehnung und damit die Geometrie des Kühlkanals zu verändern. Dabei kann beispielsweise durch eine breite Ausbildung des Kühlkanals im Bereich der Wärmequelle bei geringer Höhe, die für die Wärmeübertragung relevante Fläche vergrößert werden. Dadurch lassen sich auch Bauteile mit einer gegenüber dem Kühlkanal größeren Abmessung gleichmäßig durch die Kühlvorrichtung kühlen. Ebenso ist es alternativ oder ergänzend möglich, die Querschnittsfläche des Kühlkanals insbesondere im Bereich des Kühlkörpers zu verändern. Durch einen geringeren Querschnitt wird eine höhere Durchflussgeschwindigkeit des Fluids und damit eine effizienter Wärmeübergang von der Wärmequelle zum Fluid erreicht.

Bei einer weiteren vorteilhaften Ausgestaltung der Erfindung weist der Kühlkanal eine Vielzahl von Verzweigungen, insbesondere Verzweigungen mit einer filigranen Struktur, auf. Durch die Verzweigungen kann die für die Wärmeübertragung relevante Fläche erhöht werden. Das stellt eine effiziente Kühlung auch von Wärmequellen mit entsprechender Ausdehnung sicher. Mit einer dünnen, insbesondere einer filigranen Struktur, kann dabei die Durchflussgeschwindigkeit auch über eine breite Aufnahmefläche von Wärme konstant gehalten werden. Somit sind besonders Wärmequellen mit einer entsprechenden für die Wärmeübertragung relevante Fläche durch die Kühlvorrichtung effizient kühlbar. Insbesondere für einen Umrichter oder Stromrichter, der in einer elektrischen Maschine angeordnet ist, lässt sich diese Aufspreizung des Kühlkanals ohne Verringerung der Durchflussgeschwindigkeit des Fluids besonders effizient für die Kühlung der Halbleiter des Umrichters oder Stromrichters nutzen.

Bei einer weiteren vorteilhaften Ausgestaltung der Erfindung weist die Kühlvorrichtung einen offenen Kühlkreislauf für Wasser auf, wobei die Kühlvorrichtung einen Wärmetauscher zum Austausch von Wärme zwischen dem offenen Kühlkreislauf und einem Teil des Kühlkanals aufweist. Der offene Kühlkreislauf kann gegenüber dem Kühlkanal einen weiteren Kühlkreislauf darstellen. Dieser kann beispielsweise bei einem Schiffsantrieb mit Wasser betrieben werden. Dabei wird die Wärme des Fluids mittels des Wärmetauschers an das Wasser abgeführt. Damit kann gerade für einen Schiffantrieb eine effiziente Rückkühlung auch bei großen Motoren mit einer Leistung von mehr als 1 MW effizient mit einer bezüglich der Baugröße kompakten Kühlvorrichtung gekühlt werden.

Ebenso kann der offene Kühlkreislauf auch für einen Phasenübergang des Kühlmittels genutzt werden. So können thermisch stark beanspruchte Komponenten mittels Spraykühlung gekühlt werden. Nach Übergang in den gasförmigen Zustand kann die Flüssigkeit auf einfache Weise mit der aufgenommenen Wärme in die Umgebung entweichen. Dadurch lässt sich eine effiziente Kühlung bei engen Einbauverhältnissen realisieren.

Bei einer weiteren vorteilhaften Ausgestaltung der Erfindung werden für das additive Fertigungsverfahren zumindest teilweise Kupfer und/oder Aluminium verwendet. Besonders Kupfer weist eine hohe thermische Leitfähigkeit auf. Auch Aluminium eignet sich aufgrund seiner thermischen Eigenschaften im besonderen Maße für den Kühlkörper. Gleichzeitig sind diese Materialien sehr teuer. Mit Hilfe des additivem Fertigungsverfahrens ist es möglich, Kupfer und/oder Aluminium nur an den Stellen anzuordnen, die für den Wärmeübergang zwischen der Wärmequelle und des Fluids relevant sind. Insbesondere kann das Volumen zischen der Oberfläche des Kühlkörpers, die für die Kontaktierung mit der Wärmequelle vorgesehen und/oder eingerichtet ist, und dem Kühlkanal im Innern des Kühlkörpers Kupfer und/oder Aluminium angeordnet werden. Das übrige Volumen des Kühlkörpers kann durch ein günstigeres Material gebildet werden. Dies führt zu einem effizienten Materialeinsatz. Dadurch ist es möglich, einen hocheffizienten Kühlkörper mit nur geringen Materialkosten herzustellen.

Im Folgenden wird die Erfindung anhand der in den Figuren dargestellten Ausführungsbeispiele näher beschrieben und erläutert. Es zeigen:
- FIG 1: eine Kühlvorrichtung,
- FIG 2: einen Schnitt durch einen Kühlkörper und
- FIG 3: eine umrichterintegrierte, elektrische Maschine.

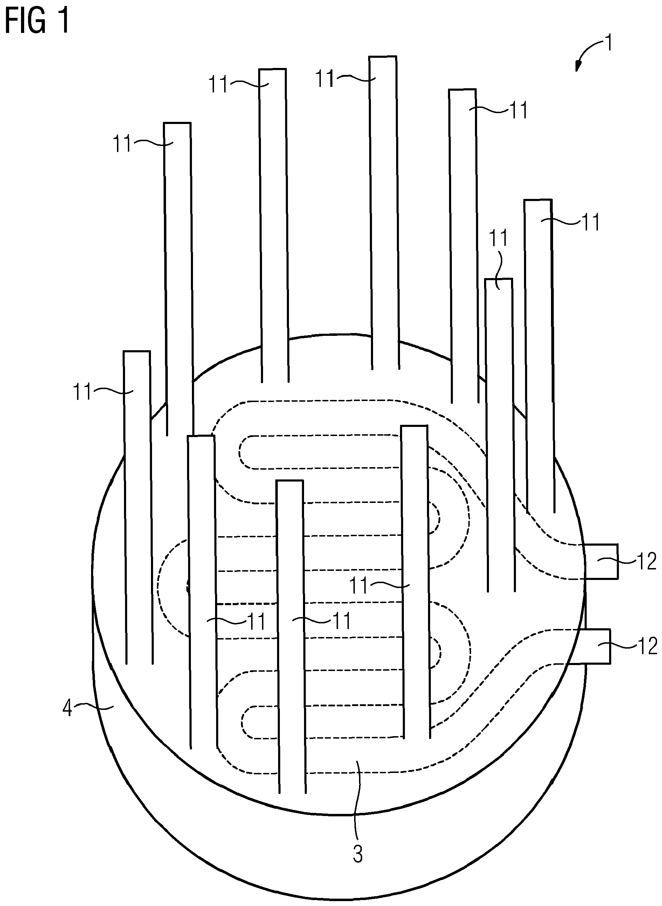

FIG 1 zeigt eine Kühlvorrichtung 1. Diese weist einen fluiddurchströmbaren Kühlkörper 4 auf. Dabei fließt das Fluid von einem der Anschlüsse 12 der Kühlvorrichtung 1 durch mindestens einen Kühlkanal 3 zu einem anderen der Anschlüsse 12. An dem fluiddurchströmbaren Kühlkörper 4 sind Vorrichtungen 11 zur Verbindung mit einem Stator 21 der umrichterintegrierten, elektrischen Maschine 2 angeordnet. Damit wird sichergestellt, dass sowohl die Motoranteile, insbesondere der Stator 21 der umrichterintegrierten, elektrischen Maschine 2 als auch ein Umrichter 5 der umrichterintegrierten, elektrischen Maschine 2 durch die Kühlvorrichtung 1 gekühlt werden. Dabei können die Vorrichtungen 11 zur Verbindung mit einem Stator 21 auch von dem Fluid durchströmt werden, das durch den Kühlkanal 3 des Kühlkörpers 4 fließt. Das Fluid kann dann zur Kühlung des Stators 21 Stäbe 22 des Stators 21 durchfließen. Dazu können die Stäbe 22 des Stators 21 als Hohlleiter ausgebildet sein, durch die das Fluid fließt. Ebenso ist es alternativ oder ergänzend möglich, dass die Vorrichtungen den Stator 21 und die Stäbe 22 des Stators 21 berührt und dadurch Wärme aufnimmt. In diesem Fall fließt das Fluid zwar nicht durch einen Stab 22, jedoch durch die Wicklung des Stators 21. Alternativ ist es möglich, die Vorrichtungen 11 zur Verbindung mit einem Stator 21 aus einem wärmeleitfähigen Material zu fertigen, so dass die Wärme des Stators 21 an den Kühlkörper 4 und das darin strömende Fluid übertragen wird.

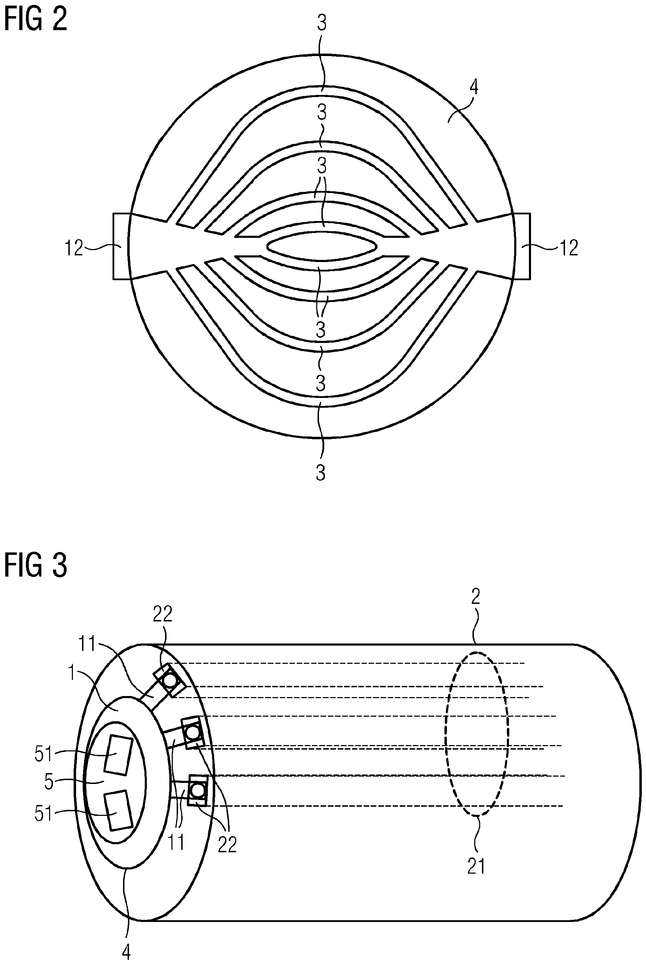

FIG 2 zeigt einen Schnitt durch einen fluiddurchströmbaren Kühlkörper 4. Dabei verzweigt sich zwischen den Anschlüssen 12 für das Fluid der Kühlkanal 3. Dabei können die Verzweigungen eine filigrane Struktur aufweisen um eine besonders große für die Kühlung relevante, homogene Fläche aufzuweisen. Darüber hinaus ist zu erkennen, dass sich die Geometrie des Kühlkanals 3 zwischen den Anschlüssen 12 dadurch ändert, dass der Querschnitt zur Mitte des Kühlkörpers 4 hin kleiner wird. Zur Vermeidung von Wiederholungen wird auf die Beschreibung zu der FIG 1 sowie auf die dort eingeführten Bezugszeichen verwiesen.

FIG 3 zeigt eine umrichterintegrierte, elektrische Maschine 2. In dieser elektrischen Maschine 2 ist ein Umrichter 5 angeordnet. Der Umrichter 5 ist derart an dem Kühlkörper 4 der Kühlvorrichtung 1 angeordnet, dass Halbleiter 51 des Umrichters 5 Wärme an das Fluid des Kühlkörpers 4 abgeben können. Darüber hinaus sind die Vorrichtungen 11 zur Verbindung mit einem Stator 21 dargestellt, die den Kühlkörper 4 derart mit den Stäben 22 des Stators 21 verbinden, dass das Fluid durch die Stäbe 21 fließt. Dabei sind die Stäbe 22 des Stators 21 als Hohlleiter ausgebildet. In der Darstellung ist der Hohlraum mit rundem Querschnitt in den Stäben 22 entsprechend sichtbar dargestellt, auch wenn er bei der Realisierung durch die Vorrichtung 11 zur Verbindung mit dem Stator 21 üblicherweise verdeckt wird. Zur besseren Übersichtlichkeit ist nur ein Teil der Stäbe 22 des Stators 21 dargestellt. Es ist zu erwähnen, dass der Stator 21 eine Vielzahl von Stäben 22 aufweist. Zur Vermeidung von Wiederholungen wird auf die Beschreibung zu den Figuren 1 und 2 sowie auf die dort eingeführten Bezugszeichen verwiesen.

Zusammenfassend betrifft die Erfindung eine Kühlvorrichtung 1 für eine umrichterintegrierte, elektrische Maschine 2, wobei die Kühlvorrichtung 1 einen Kühlkanal 3 mit mindestens einem fluiddurchströmbaren Kühlkörper 4 umfasst. Zur Verbesserung des Kühlsystems wird vorgeschlagen, dass die Kühlvorrichtung 1 ausgebildet ist, Wärme von einem Umrichter 5 der umrichterintegrierten, elektrischen Maschine 2 und von einem Stator 21 der umrichterintegrierten, elektrischen Maschine 2 aufzunehmen, wobei zumindest ein Teil des Umrichters 5 mit dem fluiddurchströmbaren Kühlkörper 4 thermisch verbindbar ist, wobei zumindest ein Teil des Stators 21 mit der Kühlvorrichtung 1 thermisch verbindbar ist. Ferner betrifft die Erfindung eine umrichterintegrierte, elektrische Maschine 2 mit einer derartigen Kühlvorrichtung 1, wobei zumindest ein Teil des Umrichters 5, insbesondere Halbleiter 51 des Umrichters 5, mit der Kühlvorrichtung 1, insbesondere mit dem fluiddurchströmbaren Kühlkörper 4, thermisch verbunden ist, wobei zumindest ein Teil des Stators 21 mit der Kühlvorrichtung 1 thermisch verbunden ist. Die Erfindung betrifft weiter ein Verfahren zur Herstellung einer derartigen Kühlvorrichtung 1 oder einer derartigen umrichterintegrierten, elektrischen Maschine 2, wobei zumindest ein Teil der Kühlvorrichtung 1 mittels eines additiven Fertigungsverfahrens hergestellt wird.

## Patentansprüche

1. Kühlvorrichtung (1) für eine umrichterintegrierte, elektrische Maschine (2), wobei die Kühlvorrichtung (1) einen Kühlkanal (3) mit mindestens einem fluiddurchströmbaren Kühlkörper (4) umfasst, wobei die Kühlvorrichtung (1) ausgebildet ist, Wärme von einem Umrichter (5) der umrichterintegrierten, elektrischen Maschine (2) und von einem Stator (21) der umrichterintegrierten, elektrischen Maschine (2) aufzunehmen, wobei zumindest ein Teil des Umrichters (5) mit dem fluiddurchströmbaren Kühlkörper (4) thermisch verbindbar ist, wobei zumindest ein Teil des Stators (21) mit der Kühlvorrichtung (1) thermisch verbindbar ist.

2. Kühlvorrichtung (1) nach Anspruch 1, wobei die Kühlvorrichtung (1) eine Vorrichtung (11) zur Verbindung mit dem Stator (21) aufweist, die derart ausgebildet ist, dass ein durch den fluiddurchströmbaren Kühlkörper (4) fließendes Fluid durch eine Wicklung und/oder mindestens einen Stab (22) des Stators (21) fließt.

3. Kühlvorrichtung (1) nach einem der Ansprüche 1 oder 2, wobei die Kühlvorrichtung (1) eingerichtet ist, einen Phasenübergang zwischen einer flüssigen und einer gasförmigen Phase als zusätzliche Kühlleistung zu nutzen.

4. Kühlvorrichtung (1) nach einem der Ansprüche 1 bis 3, wobei der Kühlkanal (3) eine über die Fließrichtung des Fluids veränderte Geometrie, insbesondere einen veränderten Querschnitt, aufweist.

5. Kühlvorrichtung (1) nach einem der Ansprüche 1 bis 4, wobei der Kühlkanal (3) eine Vielzahl von Verzeigungen, insbesondere Verzweigungen mit einer filigranen Struktur, aufweist.

6. Kühlvorrichtung (1) nach einem der Ansprüche 1 bis 5, wobei die Kühlvorrichtung (1) einen offenen Kühlkreislauf für Wasser aufweist, wobei die Kühlvorrichtung (1) einen Wärmetauscher zum Austausch von Wärme zwischen dem offenen Kühlkreislauf und einem Teil des Kühlkanals aufweist.

7. Umrichterintegrierte, elektrische Maschine (2) mit einer Kühlvorrichtung (1) nach einem der Ansprüche 1 bis 6, wobei zumindest ein Teil des Umrichters (5), insbesondere Halbleiter (51) des Umrichters (5), mit der Kühlvorrichtung (1), insbesondere mit dem fluiddurchströmbaren Kühlkörper (4), thermisch verbunden ist, wobei zumindest ein Teil des Stators (21) mit der Kühlvorrichtung (1) thermisch verbunden ist.

8. Verfahren zur Herstellung einer Kühlvorrichtung (1) nach einem der Ansprüche 1 bis 6 oder einer umrichterintegrierten, elektrischen Maschine (2) nach Anspruch 7, wobei zumindest ein Teil der Kühlvorrichtung (1) mittels eines additiven Fertigungsverfahrens hergestellt wird.

9. Verfahren nach Anspruch 8, wobei für das additive Fertigungsverfahren zumindest teilweise Kupfer und/oder Aluminium verwendet werden.
